# EUROPEAN PATENT APPLICATION

(11) **EP 3 651 230 A1**
(43) Date of publication of application: **13.05.2020**
(21) Application number: 18380014.3
(22) Date of filing: 12.11.2018
(51) Int. Cl.: H01M 2/10, H01M 2/20

(54) **ELECTRONIC DEVICE COMPRISING A HOUSING FOR A BUTTON CELL**

(71) Applicant: Simon, S.A.U., 08013 Barcelona (ES)
(72) Inventor: Vázquez Villà, Francesc Xavier, 08013 Barcelona (ES); Rodríguez Martínez, Ana Belén, 08013 Barcelona (ES); Baca Cansino, Pablo, 08013 Barcelona (ES); Gómez Lambo, Francisco Alejandro, 08013 Barcelona (ES); Faúndez Barroso, David, 08013 Barcelona (ES)
(74) Representative: Balder IP Law, S.L.

(57) **Abstract**

Electronic device (1) comprising a housing for a button cell (BB), which comprises a contact and support surface (S-) of the negative terminal (-) of the button cell, a contact and support terminal (S+) of the positive terminal (+) of the button cell arranged adjacent to a periphery (PS-) of the contact and support surface (S-), a cover (2) articulated by a hinge (21), the hinge (21) being arranged adjacent to the periphery (PS-) of the contact and support surface (S-), a first elastic pressure element (3) of the button cell (BB) against the contact and support surface (S-), a second elastic pressure element (4) of the button cell (BB) against the positive terminal (+) of the button cell, wherein the first elastic pressure element (3) protrudes from a general plane of the cover (2) on the side of the cover (2) destined to face the button cell (BB), the second pressure element (4) is arranged adjacent to the periphery (PS-) of the contact and support surface (S-).

## Description

### TECHNICAL FIELD

This invention is related to the field of electronic devices powered with a button cell. These devices comprise a housing for the button cell. This housing must be easily accessible and must ensure that the electrical contacts are effective.

### STATE OF THE ART

Known are electronic devices that are powered by a button cell. For this purpose, these devices comprise a housing that holds the button cell in contact with the terminals.

A typical arrangement for ensuring the contacts includes:
- a contact and support surface of the negative terminal of the button cell, surface on which the pile is deposited, the contact and support surface defining a periphery;
- one or more contact terminals arranged to contact the cylindrical surface of the button cell positive terminal or the negative surface of the button cell; and
- a cover that is arranged to press the cell button against the terminals, which can be either hinged or guided.

Generally, the contact terminals are flexible metallic strips which are non-tensioned when there is no button cell in the housing, but which adopt a tensioned state when the battery is fitted in the housing.

A well-known major drawback of these solutions is that the metallic strips have a plastic behaviour and over time deform and cannot ensure no more a good electrical contact with the button cell.

### DESCRIPTION OF THE INVENTION

For overcoming the mentioned drawbacks and achieve the afore mentioned aims, the present invention proposes an electronic device comprising a housing for a button cell, the electronic device comprising:
- a contact and support surface of the negative terminal of the button cell, the contact and support surface defining a periphery;
- a contact and support terminal of the positive terminal of the button cell arranged adjacent to the periphery of the contact and support surface so that it can contact the cylindrical surface of the button cell positive terminal;
- a cover articulated by a hinge at one of its ends, the hinge being arranged adjacent to the periphery of the contact and support surface, the cover being provided with retaining means at an end opposite to the hinge to maintain the button cell between the contact and support surface and the cover;
- a first elastic pressure element of the button cell against the contact and support surface;
- a second elastic pressure element of the button cell against the contact and support terminal of the positive terminal of the button cell, and wherein
- the first elastic pressure element protrudes from a general plane of the cover on the side of the cover destined to face the button cell,
- the second pressure element is arranged adjacent to the periphery of the contact and support surface or is integrally formed with the cover,
such that when the retaining means are engaged to maintain the button cell between the contact and support surface and the cover, the first elastic pressure element presses the button cell against the contact and support surface and the second elastic pressure element presses the button cell against the contact and support terminal.

This connection structure solves the prior art drawbacks mentioned above.

In particular, according to the invention, the electrical and mechanical functions are segregated. This is achieved by separating the functions by providing:
- On one side the electrical contacts, which can be fixed or subjected to a minimum deformation, and
- pressure elements different from the electrical contacts and which can be manufactured with a material that guarantees elasticity over time, and which delays the apparition of plastic deformation.

The inventors have verified that this arrangement is effective to guarantee a durable and effective contact between the button cell and the terminals.

It should be noted that although the invention can be applied to mobile devices, its main commercial destination is that of intelligent and networked switches and sockets, especially for the domestic sector. Therefore, it is important that the life time of the device is not limited by something as banal as is the electrical contact of some terminals.

In some embodiments, the retaining means comprise a first latching hook arranged in the cover opposite the hinge and a second latching hook arranged on the periphery of the contact and support surface, the second latching hook being complementary to the first hook.

In some embodiments, the first elastic pressure element is integrally formed with the cover.

In this way, it is only necessary to provide the suitable shapes in the mold, and therefore it is not necessary to supply straps or added parts.

In some embodiments, the device comprises a support tray and a printed circuit board (PCB) placed on the support tray.

This is a very advantageous feature, because this structure will not only segregate the functions of electrical contact and mechanical pressure, as foreseen by the main inventive concept of the present invention, but also the elements that carry out these functions can belong to these two separate pieces, support tray and PCB, as will be seen below.

In some embodiments, the hinge is made of an axis (or protruding pin) which belongs to the cover and two legs each provided with a hole for the articulation of the axis. In other embodiments the cover comprises the holes and the legs comprise the axis.

In some embodiments:
- the contact and support surface of the negative terminal of the button cell and the contact and support terminal of the positive terminal of the button cell are attached to the printed circuit board; and
- the legs, the second pressure element and the second latching hook are attached to the support tray;
the printed circuit board being provided with through holes for the legs, the second pressure element and the second latching hook.

Therefore, the electrical contact and power transport functions are all left for the PCB, where all the electrical components will be, while the mechanical pressure functions are left to a structural part.

From a manufacturing point of view this is very advantageous, since they are elements that are manufactured differently. In particular, no element with electrical function is left for the mechanical parts and vice versa. Each manufacturer can dedicate themselves to their own. There will be no moving parts on the PCB, only fixed contacts. And in the support tray part, there will only be mechanical functions, no electrical element. The combination of both functions is guaranteed by a suitable geometrical fit between the support tray and the PCB. This also results in a reduction in fabrication costs and a better quality of the resulting product.

In some embodiments the device comprises a main cover hinged with the support tray, the hinge being placed on the tray at a side of the contact and support surface.

The inventive concept can be applied to any device powered by button cells, but an application of interest is that of intelligent switches, and more particularly of rocker switches, in which two parts are hinged to form a manual actuator.

In some embodiments, the main cover has a through hole that allows accessing the cover of the cell button holder. The main cover can also be named back cover, since it will the part fixed to the wall, that is the non-movable part of the switch, whereas the tray will be the movable/rotating part of the rocker switch, preferably covered with an embellisher.

As will be illustrated below, in this way it is possible to compact the components of the electronic device, for instance a switch, while allowing access to the button cell, for its replacement, without having to disassemble the electronic device. Preferable, the contour of the through hole matches the contour of the cover of the cell button, to increase the integration.

In some embodiments, the second pressure element is integrally formed with the support tray.

According to the invention, any component that performs a mechanical function will be molded, preferably with some main component of the device. As will be seen later, any component that performs a mechanical function will be integrally molded with the support tray or with the main cover.

In some embodiments, the second pressure element is a lever which base is connected to the support tray, the lever flexes with a rotation movement around an axis perpendicular to the support tray, such that it can press the cell button against the contact and support terminal of the positive terminal of the button cell.

In some embodiments, the electronic device is a switch, which printed circuit board comprises a microswitch and the main cover comprises an actuator lever for activating the microswitch.

In some embodiments the actuator lever is integrally formed with the main/back cover.

In some embodiments the printed circuit board comprises a microprocessor, a remote communication unit and/or led source lights.

In some embodiments the first latching hook is U-shaped such that it is elastic an can collapse for engaging with the second latching hook, the second latching hook being an inverted L for engagement of the first latching hook.

Finally, in some embodiments, the tray, the cover, and the main cover are made of plastic materials.

### BRIEF DESCRIPTION OF THE DRAWINGS

To complete the description and in order to provide a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:
FIG. 1 is a perspective view of the device according to the invention, with the cover opened, before putting the button cell in its housing.
Figures 2 to 5 show different perspectives of the device.
Figure 6 shows the PCB and the button cell arranged on it.
Figure 7 shows the PCB, but without the button cell.
Figure 8 is another perspective of the PCB.
Figures 9 and 10 are plan views of the PCB.

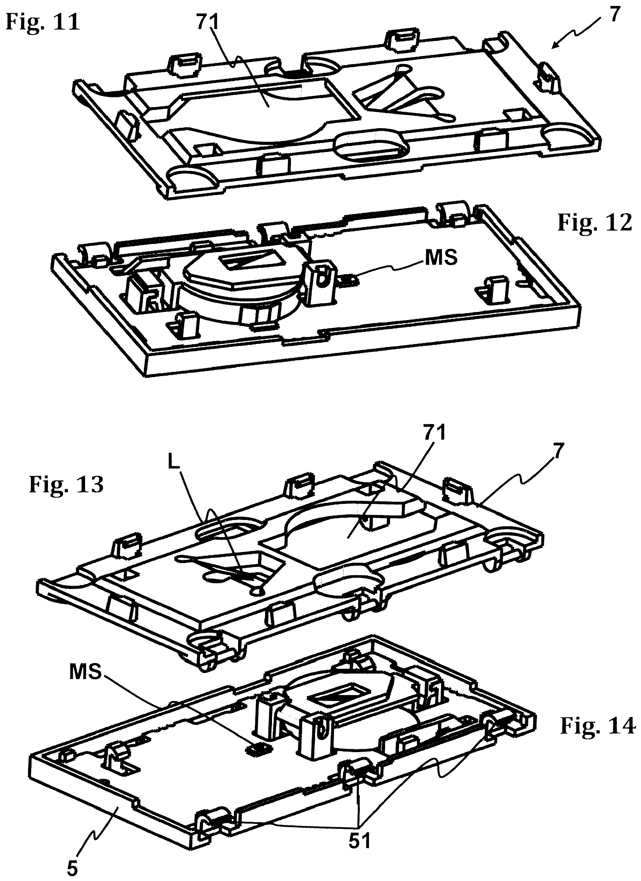

Figures 11 to 14 show a preferred embodiment of the invention, in which the device comprises a main cover articulated with the tray, so that it constitutes a rocker switch.

### DESCRIPTION OF A WAY OF CARRYING OUT THE INVENTION

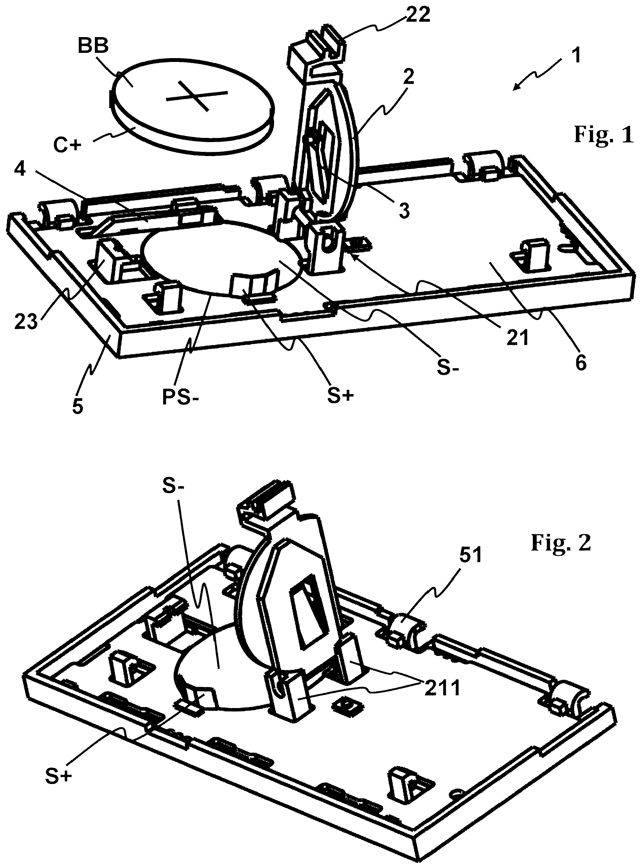

Fig. 1 shows a preferred embodiment of the electronic device 1 according to the invention. It comprises a support tray 5 provided with a housing for a button cell BB. In all the embodiments shown, the device comprises a support tray 5 and a printed circuit board 6 placed on the support tray 5.

In particular, the electronic device 1 comprises a contact and support surface S- of the negative terminal - of the button cell BB. This contact can be made of a metallic compound containing gold, for example. This contact and support surface S- defines a periphery PS-. In most cases, the surface will extend such that it coincides with the surface of the button cell.

The other contact is a contact and support terminal S+ of the positive terminal + of the button cell arranged adjacent to the periphery PS- of the contact and support surface S- so that it contact the cylindrical surface C+ of the button cell BB positive terminal +; As shown, this component is a short fence made of a metallic conductive material, perpendicular to the general plane of the tray and the PCB. It is not conceived as a metallic flexible strip, but instead is a fixed terminal not subjected to sensible deformations.

To keep the button cell in place, the device comprises a cover 2 articulated by a hinge 21 at one of its ends. The hinge 21 is arranged adjacent to the periphery PS- of the contact and support surface S-. The cover 2 is provided of a first latching hook 22 at an end opposite to the hinge 21; This first latching hook 22 cooperates with a second latching hook 23 arranged on the periphery PS- of the contact and support surface S- but opposite to the hinge.

The second latching hook 23 is complementary to the first hook 22 so that they cooperate to maintain the button cell BB between the contact and support surface S- and the cover 2. In the embodiment shown, the first latching hook 22 is U-shaped such that it is elastic and can collapse for engaging with the second latching hook 23. As shown, the second latching hook 23 is an inverted L for engagement of the first latching hook 22.

To ensure the electrical contact, according to the invention, the device comprises a first elastic pressure element 3 of the button cell BB against the contact and support surface S- and a second elastic pressure element 4 of the button cell BB against the contact and support terminal S+ of the positive terminal + of the button cell.

As shown in FIG. 1 the first elastic pressure element 3 protrudes from a general plane of the cover 2 on the side of the cover 2 destined to face the button cell BB. Therefore, in the configuration where the latching hooks 22 and 23 are mutually engaged, the first elastic pressure element 3 will press the button cell against the contact and support surface S-. In the embodiments shown, the first elastic pressure element 3 is integrally formed with the cover 2.

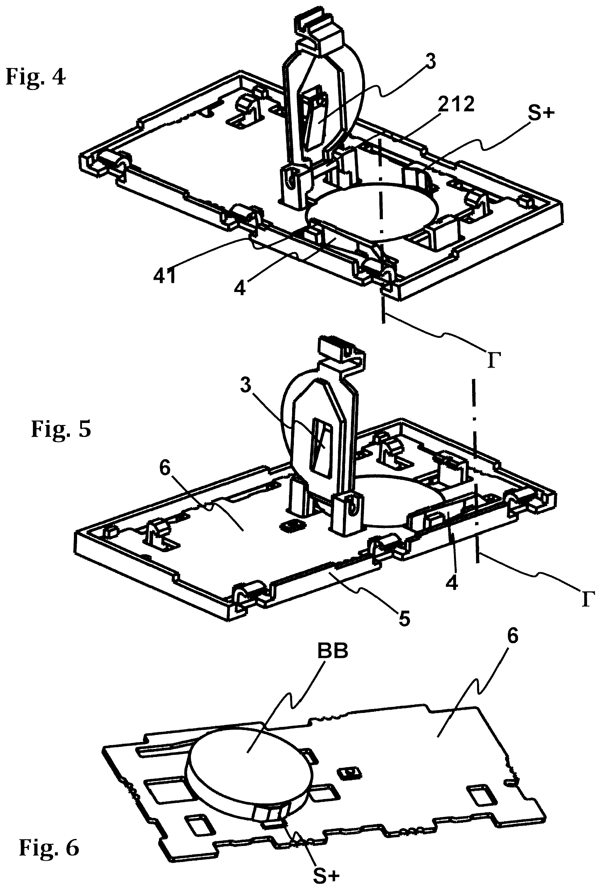

As shown for example in FIG. 5, in the embodiment shown the second pressure element 4 is arranged adjacent to the periphery PS- of the contact and support surface S-, and it consists of a lever which base is connected to the support tray 5, the lever flexes with a rotation movement around an axis Γ perpendicular to the support tray 5. The pressure element 4 is a lever that flexes such that it can press the cell button BB against the contact and support terminal S+ of the positive terminal + of the cell button. Therefore, the lever is an element that can be molded with the support tray 5, without the need to provide separate elements.

The lever is conceived such that it slightly invades the volume destined to house the button cell. The stepped and rounded edge of the button cell will help to gradually displace the tip 41 of the lever 4, thus bending elastically the lever 4, and hence pressing the button cell BB against the terminal S+ arranged in the opposite side of the lever tip 41.

Therefore, when the first retaining hook 22 and the second retaining hook 23 cooperate to maintain the button cell BB between the contact and support surface S- and the cover 2, the first elastic pressure element 3 presses the button cell BB against the contact and support surface S- and the second elastic pressure element 4 presses the button cell BB against the contact and support terminal S+.

As shown in FIGS 4 and 2 for example, the hinge 21 is made of an axis 212 which belongs to the cover 2 and two legs 211 each provided with a hole for the articulation of the axis 212.

As already said, one of the major advantages of the invention is the possibility to manufacture separately the electrical and the mechanical plastic parts. In particular, and as shown in FIG. 2:
- the contact and support surface S- of the negative terminal - of the button cell and the contact and support terminal S+ of the positive terminal + of the button cell are attached to the printed circuit board 6; and
- the legs 211, the second pressure element 4 and the second latching hook 23 are attached to the support tray 5.

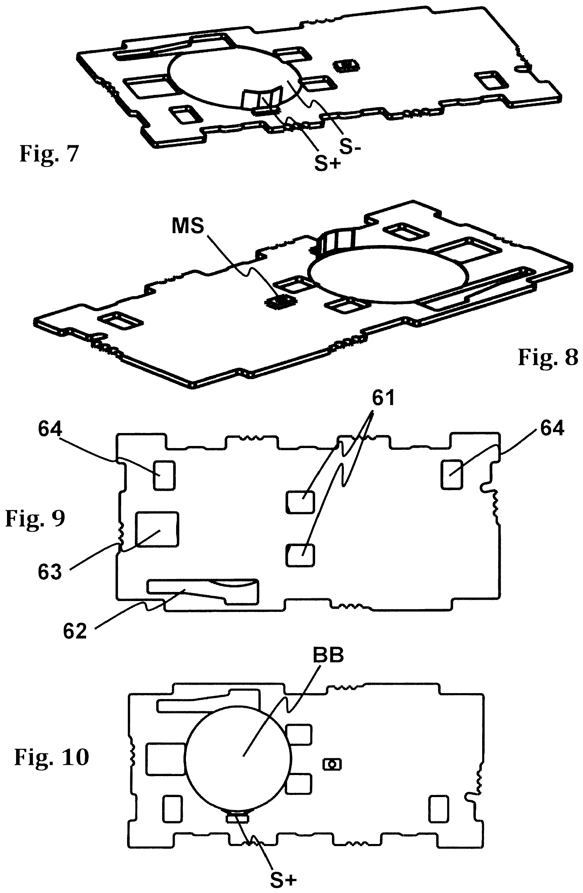

To allow this combination to function, as shown in FIGS 8 and 10, the printed circuit board 6 is provided with through holes for the legs 211, the second pressure element 4 and the second latching hook 23.

FIGS, 11 to 14 show an embodiment of the invention where the device is a rocker switch. For this purpose, the device comprises a main/back cover 7 hinged with the support tray 5, the hinge 51 being placed at a side of the tray 5, and correspondingly, in a side of the main cover 7. The main cover 7 has a through hole 71 that allows accessing the cover 2 of the cell button BB, such that there is no need to dismount it for replacing the button cell BB.

In this embodiment, the printed circuit board comprises a microswitch MS and the main cover 7 comprises an actuator lever L, preferably integrally formed with the main cover 7, for activating the microswitch MS. As shown in FIG. 9, the PCB is provided with through holes 61, 62, 63 and 64. The holes 64 are destined to allow passing through two stop hooks destined to limit the aperture of the hinged parts 5 and 7. The through holes 61 are destined to allow passing through the legs 211 of the hinge. The through hole 63 is aimed at allow passing through the second latching hook 23 of the retaining means and the elongated groove 62 is destined to allow passing through the second elastic pressure element 4.

In this text, the term "comprises" and its derivations (such as "comprising", etc.) should not be understood in an excluding sense, that is, these terms should not be interpreted as excluding the possibility that what is described and defined may include further elements.

The invention is obviously not limited to the specific embodiments described herein, but also encompasses any variations that may be considered by any person skilled in the art within the general scope of the invention as defined in the claims.

## Claims

1. Electronic device (1) comprising a housing for a button cell (BB), the electronic device (1) comprising:
- a contact and support surface (S-) of the negative terminal (-) of the button cell (BB), the contact and support surface (S-) defining a periphery (PS-);
- a contact and support terminal (S+) of the positive terminal (+) of the button cell arranged adjacent to the periphery (PS-) of the contact and support surface (S-) so that it can contact the cylindrical surface (C+) of the button cell (BB) positive terminal (+);
- a cover (2) articulated by a hinge (21) at one of its ends, the hinge (21) being arranged adjacent to the periphery (PS-) of the contact and support surface (S-), the cover (2) being provided with retaining means (22, 23) at an end opposite to the hinge (21) to maintain the button cell (BB) between the contact and support surface (S-) and the cover (2); **characterized in that** it comprises:
- a first elastic pressure element (3) of the button cell (BB) against the contact and support surface (S-);
- a second elastic pressure element (4) of the button cell (BB) against the contact and support terminal (S+) of the positive terminal (+) of the button cell,
- the first elastic pressure element (3) protrudes from a general plane of the cover (2) on the side of the cover (2) destined to face the button cell (BB),
- the second pressure element (4) is arranged adjacent to the periphery (PS-) of the contact and support surface (S-) or is integrally formed with the cover (2),
such that when the retaining means (22, 23) are engaged to maintain the button cell (BB) between the contact and support surface (S-) and the cover (2), the first elastic pressure element (3) presses the button cell (BB) against the contact and support surface (S-) and the second elastic pressure element (4) presses the button cell (BB) against the contact and support terminal (S+).

2. Electronic device according to claim 1, wherein the retaining means comprise a first latching hook (22) arranged in the cover (2) opposite to the hinge (21) and a second latching hook (23) arranged on the periphery (PS-) of the contact and support surface (S-), the second latching hook (23) being complementary to the first hook (22).

3. Device (1) according to any of the previous claims, wherein the first elastic pressure element (3) is integrally formed with the cover (2).

4. Device (1) according to any of the previous claims which comprises a support tray (5) and a printed circuit board (6) placed on the support tray.

5. Device (1) according to claim 3, wherein the hinge (21) is made of an axis (212) which belongs to the cover (2) and two legs (211) each provided with a hole for the articulation of the axis (212).

6. Device (1) according to claim 2 and claim 4, wherein:
- the contact and support surface (S-) of the negative terminal (-) of the button cell and the contact and support terminal (S+) of the positive terminal (+) of the button cell are attached to the printed circuit board (6); and/or
- the legs (211), the second pressure element (4) and the second latching hook (23) are attached to the support tray (5);
the printed circuit board (6) being provided with through holes for the legs (211), and/or for the second pressure element (4) and/or for the second latching hook (23).

7. Device according to claim 4, which comprises a main cover (7) hinged with the support tray (5), the hinge (51) being placed at a side of the tray (5).

8. Device according to claim 7, wherein the main cover (7) has a through hole (71) that allows accessing the cover (2) of the button cell (BB), wherein preferably the through hole (71) matches the contour of the cover (2) of the button cell (BB).

9. Device according to claim 4 and any claim dependent thereof, wherein the second pressure element (4) is integrally formed with the support tray (5).

10. Device according to claim 9, wherein the second pressure element (4) is a lever which base is connected to the support tray and flexes with a rotation movement around an axis perpendicular to the support tray (5), such that it can press the cell button (BB) against the contact and support terminal (S+) of the positive terminal (+) of the button cell.

11. Device according to claim 7 and any claim dependent thereof wherein the printed circuit board comprises a microswitch (MS) and the main cover (7) comprises an actuator lever (L) for activating the microswitch (MS).

12. Device according to claim 11, wherein the actuator lever (L) is integrally formed with the main cover (7).

13. Device according to claim 4 or any claim depending thereof, wherein the printed circuit board comprises a microprocessor, a remote communication unit and/or led source lights.

14. Device according to any of the previous claims, wherein the first latching hook (22) is U-shaped such that it is elastic an can collapse for engaging with the second latching hook (23), the second latching hook (23) being an inverted L for engagement of the first latching hook (22).

15. Device according to claim 4 or any depending thereof, wherein the tray (5), the cover, and the main cover (7) are made of plastic materials.
